# EUROPEAN PATENT APPLICATION

(11) **EP 1 536 274 A1**
(43) Date of publication of application: **01.06.2005**
(21) Application number: 03292927.5
(22) Date of filing: 25.11.2003
(51) Int. Cl.: G02F 1/225, G02F 1/1334, G02B 6/12

(54) **Reconfigurable photonic bandgap device and method of configuring the same**

(71) Applicant: ALCATEL, 75008 Paris (FR)
(72) Inventor: Schreiber, Gerhard, Dr., 70825 Korntal-Münchingen (DE); Baumgärtner, Armin, Dr., 71638 Ludwigsburg (DE)
(74) Representative: Rausch, Gabriele, Dr.

(57) **Abstract**

The invention is related to a reconfigurable photonic bandgap device with a substrate layer (1) a photonic crystal structure (2) with pores in a photonic crystal layer (2), and electrodes (4) on top of the photonic crystal layer (2). The active layer (3) on top of the photonic crystal layer (2) is an electro-optic material covered by electrodes (4) on top of the electro optical layer (3).

## Description

### Background of the Invention

The present invention generally relates to reconfigurable photonic bandgap devices. More specifically, the present invention relates to a method for configuring and tuning crystals for switching, for modulating and filtering of electromagnetic radiation.

### Description of the Related Art

In communications systems using optical multiplexing such as dense wavelength, division multiplexing (DWDM), wavelength division multiplexing (WDM), time division multiplexing (TDM) and the like, the distribution of optical information is facilitated by the use of components such as fiber optic gratings, interferometers, various types of filters and the like. Traditional optical components, which are fabricated in plastic, semiconductor, or glass, are largely fixed in their optical properties by their rigid, essentially permanent structures. Thus, in this context, the distribution of optical information is also fixed and the service provider is unable to change the configuration of the DWDM, WDM or TDM format, e.g., distribution, without physically changing the communications system. A new type of optical components come up with the photonic crystals.

One type of photonic crystal known in the art comprises a glass or semiconductor substrate having a plurality of cylindrical apertures formed there through in a pattern. Some or all of the cylindrical apertures, such as pillars or pores can be filled with a material having a refractive index different from the refractive index of the substrate.

As light is injected into one end of the substrate, the light interacts with the pillars. The light, as it propagates through the crystal, will be split into multiple paths that constructively and deconstructively interfere with one another to effectively filter the light as it passes through the crystal. For example, a particular bandwidth of light propagates through the filter and other wavelengths of light are either reflected or absorbed within the crystal structure. Generally, the spacing of the pillars and their refractive indices defines a filter that reflects a certain bandwidth of wavelengths of light. The pillars may be filled with gas, fluid or solid materials having various refractive indices. Crystal structures of this type are formed for a specific use and filter a specific wavelength of light and are not reconfigurable in a selective manner.
As such, the crystals are used in applications where a fixed filter is necessary or desired.

Therefore there is a need in the art for a method and apparatus for configuring and tuning a photonic crystal.
US 6,639,712 shows a method and apparatus for configuring and tuning a crystal by selectively controlling a fluid supplied to a plurality of nodes within a substrate. The apparatus comprises a substrate having at least one node that can be selectively supplied with a liquid that will change the material property of the node. The node may be a spherical cavity in a three-dimensional structure, a cylindrical aperture in two-dimensional structure, or a cavity in a one-dimensional structure. The node or nodes in the substrate are coupled to a fluid distribution assembly that selectively alters the material property of the nodes. The material property may be changed by moving the fluid or material in a fluid, using electrohydrodynamic pumping, electroosmotic pumping, electrophoresis, thermocapillarity, electrowetting or electrocapillarity. The change in the material property in at least one of the nodes changes the electromagnetic radiation filtering or switching characteristics of the crystal.

This method and apparatus allows to reconfigure a photonic crystal. The use of a fluid material which must be filled in and out during the run time of a system is complex. The potential use in common telecommunication systems is limited.

### SUMMARY OF THE INVENTION

The present invention is reconfigurable photonic bandgap device forming a pluarality of configurable optical components. The invention is also related to a method for configuring and tuning a crystal by selectively controlling electro optical active material by electrodes formed on the top of the substrate. The device comprises a substrate having at least one electrode that changes the material property of an electro optical active material and so of the photonic crystal.
Such crystal structures can be used to switch or filter or modulated electromagnetic radiation such as light or microwaves.

The invention is explained in the figure and the description below.
Fig. 1 shows a top view of a modulator formed in a photonic crystal.
Fig.2 shows a cross section through a device
Fig. 3 shows another cross section through a device
Fig. 4 shows a cross section with structured electro-optical layer
Fig. 5 shows an embodiment with electro-optical material in the pores of photonic crystal.
Fig. 6 shows a filter structure for resonance tuning
Fig . 7 shows a filter structure for reflectivity tuning
Fig. 8 shows a complete reconfigurable photonic crystal.

### Short Description of the Invention

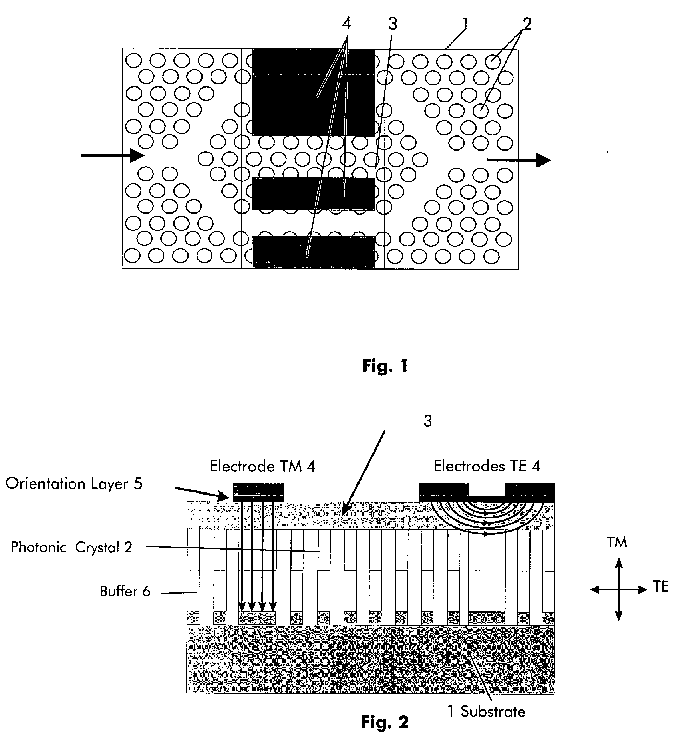

Figure 1 shows the principle of an optical modulator designed as a Mach Zehnder structure in a photonic crystal. The photonic crystal comprises a porous structure that allows a clear guiding of electro magnetic waves along the designed paths. In this embodiment a modulator with one input and one output path is shown. The
A substrate 1 is structured with pores as a photonic crystal layer 2 using well known technology like etching or hole burning. The structure of the pores in this example shows a path without holes in form of a Mach Zehnder interferometer structure. An electro optical material 3 covers a part of the substrate 1 and overlay numerous holes of the photonic crystal structure. The electro optical material 3 covers the two paths of the interferometer structure. On top of the electro optical material 3 electrodes 4 are implemented on the modulator. The electrodes 4 cover either the path of the interferometer or limit both sides of the optical path. In this example an asymmetric electrode assembly is chosen which avoids polarization dependency of the modulator.

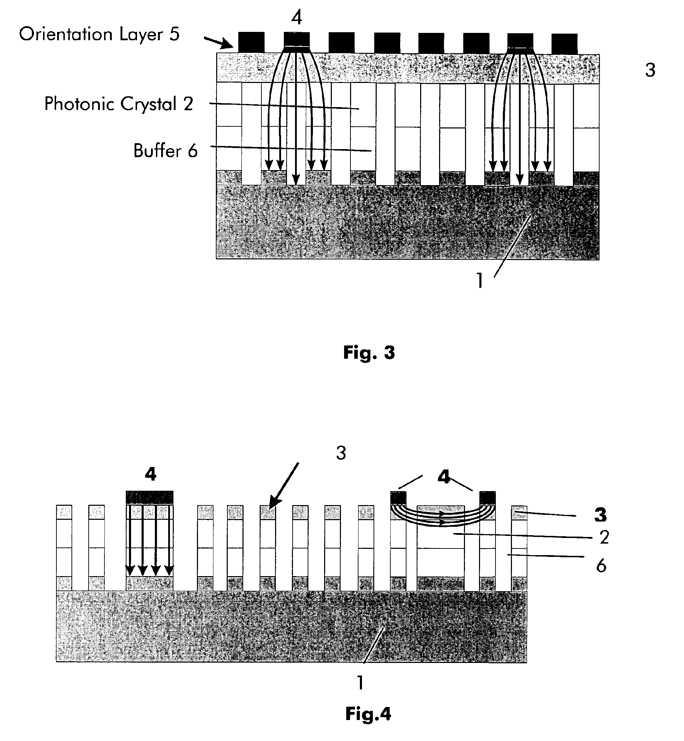

Fig 2 and Fig 3 show two different embodiments of the structure produced with different process steps.

A photonic crystal is produced in an etching process or in any kind of beam lithography as electron beam or UV light. The processes dependent on the material use semiconductor or silicon dioxide or polymer. One example for etching a glass substrate to obtain pores for a photonic bandgap structure is described below.

Photonic bandgap devices are as an example based on a triangular lattice of air pores plasma etched through the cladding and core layers of a single-mode silicon nitride waveguide. The waveguide consists of a thermally grown, 1.8 µm thick silicon dioxide substrate buffer layer (n=1.46), a 250 nm thick silicon nitride waveguiding layer (n=2.02) deposited by Low Pressure Chemical Vapor Deposition (LPCVD), and a thin (75-180 nm) silicon dioxide cladding layer, also deposited by LPCVD. These different layers are not shown in the figures. The layers described above are included in the photonic crystal structure 2. The wafers are then patterned by direct-write electron beam lithography and plasma-etched to create wells extending down to the core/buffer interface.
It is found that it is considerably easier to create extremely narrow pores than wider ones at a submicron pitch since the resist walls forming the narrow rib between adjacent pores tend to collapse as the diameter is increased. Pores with diameters in the range 50 to 120 nm were easily fabricated using standard processes. In order to create a photonic band gap however, a volume air-filling fraction of over 20% is required. One solution is to develop a well-controlled process to permit the lateral expansion of the pores after an initial isotropic plasma etch. This permits fine-tuning of the photonic band gap after initial fabrication.

Using lithography and plasma etching processes to facilitate the expansion of the pores, it is possible to fabricate good quality pores with diameters in the range 50 nm-200 nm at a pitch of 260 nm through waveguide structures well over 500 nm thick. Furthermore, the pore profile may be modified to create the isolated waveguide structures discussed above.

After the initial plasma etch, the pore diameter can be expanded in the silicon nitride layer only, by a material-specific wet etch process.
The isotropy of the pore walls may be greatly increased by a special pre-etch priming process used in conjunction with careful post-etch cleaning and drying. This ensures a rapid and uniform-etch start and stop. A similar process may be applied to the oxide buffer layer, to undercut the porous silicon nitride waveguide core once the desired pore diameter has been obtained. Unfortunately, this kind of structure is extremely fragile and may collapse due to stress induced by thermal cycling during original layer growth if more than a few lattice periods are required. This may be obviated by creating a honeycomb of very porous silicon dioxide, which will still support the less porous waveguide core. This may be achieved by carefully expanding a narrow capillary etched part way into the silicon dioxide buffer layer.

After this structuring process the photonic crystal is covered with a layer of electro-optical material 3. The material is sputtered on top of the photonic crystal structure and over clad the photonic material and the pores completely as described in Fig. 2. The electro- optical material 3 can by a liquid crystal material, a ferro electrical material or polymer dispersed liquid crystals. PDLCs are well-known in the art. (See, e.g., P. Drzaic, Liquid Crystal Dispersions, Ch. 4, World Scientific, River Edge (1998); K. Amundson et al., "Morphology and Electro-Optic Properties of Polymer-dispersed Liquid-Crystal Films," Physical Review E, Vol. 55, 1646 (1997).) A liquid-crystal mesophase of interest in the invention is the nematic phase, in which rod-like, organic liquid-crystal molecules tend to align along a common direction (so-called director), while possessing no overall translational order. These molecules are birefringent, having an extraordinary refractive index along their long axis, and ordinary refractive index along the orthogonal short axes. Typical refractive index values are nₑ about1.7 and nₒ about1.5, although materials with lower birefringence, and lower nₒ are commercially available. A dispersion of liquid crystal inside a polymer is typically formed by mixing the liquid-crystal material with a photocurable monomer at an appropriate volume ratio, and then curing the monomer with UV radiation. The cross-linking of the polymer leads to phase separation, trapping the liquid crystal in droplets, the sizes of which are capable of being adjusted by suitable choice of volume fractions and curing intensities. Typical liquid crystal droplet sizes in PDLC materials range from a few hundred nanometers to several microns. The separation between the droplets also depends on volume fraction and curing parameters, and generally ranges from separations similar to droplet diameter to cases where droplets are separated by only very narrow polymer walls of thickness much less than droplet size. An example of a useful configuration for the invention is of tightly spaced, approximately spherical, droplets of a diameter of about 1.5 µm size. Within a PDLC, the refractive index of the cured polymer is optionally chosen to closely match to ordinary refractive index. The PDLC material is made less scattering and more transparent by applying an aligning electric field across the PDLC while the liquid crystals are still in the nematic phase. The anisotropic susceptibility of the LC molecules causes the director to align with the field. With no electric field, and the LC in their nematic phase, incident light encounters a relatively highly scattering cross-section. If an electric field is applied, light incident onto the PDLC parallel to the electric field sees a droplet with a refractive index of nₒ which matches the index of the polymer. It should be noted that the index match due to an electric field is only ideal in the normal-incidence direction, since the LC material remains birefringent. Also, in the case of an electric field above threshold, but below saturation, a partial reorientation of molecules occurs, and therefore a partial re-tuning of the effective droplet refractive index. However, by applying an electric field to a sample elevated to a higher temperature within the nematic phase, the LC viscosity decreases, resulting in lower reorientation fields and faster LC switching times. For this reasons, a combination of electrical and thermal switching is a useful technique. In addition, LC materials also possess an anisotropy in magnetic susceptibility, so analogous molecular tuning and reorientation may be accomplished by appropriate magnetic field switching. Another external variable capable of tuning devices of the invention is pressure, because the scattering cross section is a function of applied pressure for the PDLC materials. It is possible to perform the switching function using a variety of techniques. A useful technique is to deposit thin layers of patterned metal onto the PDLC.

The PDLC layer is applied on top of the photonic crystal structure. The orientation, if necessary is done by an additional layer 5 to allow a permanent pre orientation of the rod form molecules in the material.

Fig. 2 shows an example with electrodes which that are deposited across a number of photonic crystal pores. The arrows in the figure show the gradient of the magnetic field 7 and the gradient of the electrical field 8.

Fig. 3 describes a different solution for applying electrodes. In this embodiment the electrodes 4 are only arranged on top of the photonic crystal pores. In a result the magnetic field has a different gradient.

Fig. 4 shows another embodiment of the invention. Here the structure is processed in a different way. The electro optical layer 3 is applied on the substrate and the unstructured photonic crystal layers before the structuring process take place. The complete material is processed after deposition of the electro optical layer to get the porous photonic crystal structure. In a result the material of the electro optical layer 3 is only remaining on top of the columns between the pores of the photonic crystal.

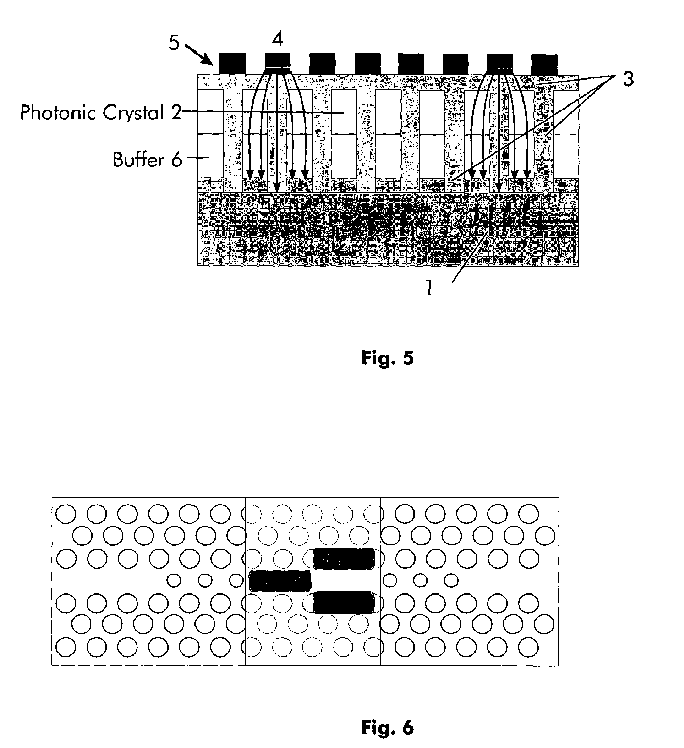

In Fig 5 an embodiment is described which comprises electro-optical material in the pores of the photonic crystal. In this embodiment of the invention the electro optical material is implemented in addition in the pores of the photonic crystal.

For a person skilled in the art any other solution of deposition of a layer of electro-optical material on top of a photonic crystal can be applied.

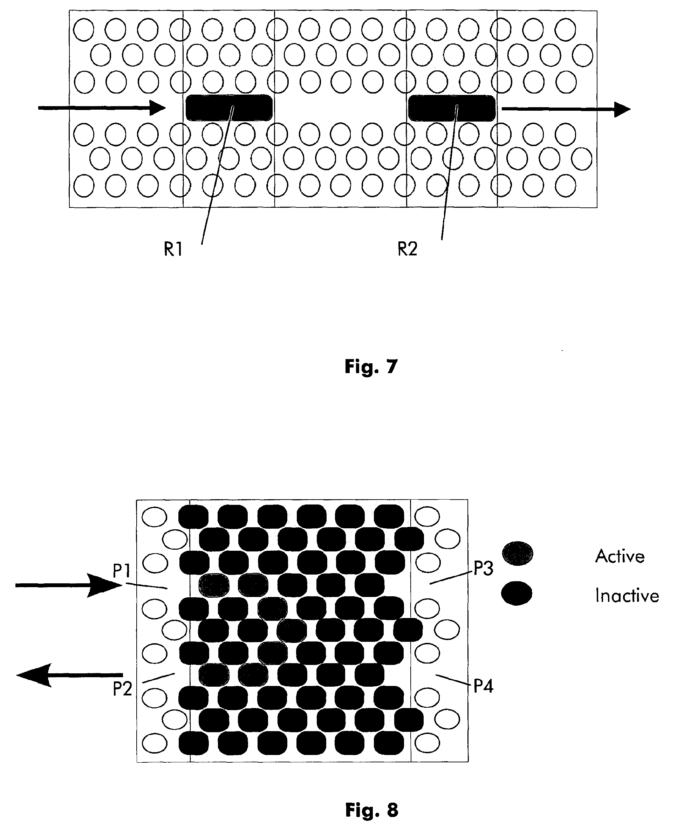

Fig. 6 describes a solution of an filter designed to filter out only the resonant signal of the input electro magnetic wave. The filter is tunable when an electrical filed is applied on the electrodes. Than the resonant peak is shifted in its energy. In a filter structure like this the effect of back reflection is not suppressed and influences the quality of the filter.
The problems of back reflection can be avoided using a structure as proposed in Fig. 7 The structure comprised two electrodes over an electro optical layer. The electrodes apply an electrical/magnetic filed on the photonic crystal send the electro optical layer. The effect is that the reflectivity of the structure changes. If the reflectivity introduced by the electrodes 4 are adapted to each other the back reflection can be suppressed. The correlation between them must follow the rule R₁ = R₂ e ^{-2nL}. The adaptation of the reflectivity is done either through applying the electrical files. Or the electro optical material is adapted in its refraction index during applying and annealing phase.

Figure 8 show a realization of a full configurable photonic crystal. The photonic crystal is completes covered by the electro optical layer 3. On top an electrode structure is deposited which comprises electrodes on top of each pore in the photonic crystal. These electrodes have separate connections to an electrical driver and are to be activated electrode by electrode. The dark electrodes in the figure represent the inactive ones, the gray electrodes are active. As shown the electromagnetic wave follows the activated path in the photonic crystal.
As an example here a 2x2 switch is realized. The electromagnetic wave, which is fed into the device via port 1, is routed by activation of electrodes either to port 2 or to port 3 or 4 or to more than one port to split the energy.

The fully configurable device allows the function of a switch, a coupler and a filter.

## Claims

1. Reconfigurable photonic bandgap device comprising a substrate layer (1) a photonic crystal structure(2) with pores in a photonic crystal layer (2) , and electrodes (4) on top of the photonic crystal layer (2), **characterized by** applying an active layer (3) on top of the photonic crystal layer (2) wherein the active layer (2) is an electro-optic material covered by electrodes (4) on top of the electro optical layer (3).

2. Reconfigurable photonic bandgap device according claim 1 wherein the active layer (3) does not comprise pores as the photonic crystal layer (2).

3. Reconfigurable photonic bandgap device according claim 1 wherein the active layer (3) comprises the same porous structure as the photonic crystal layer (2).

4. Reconfigurable photonic bandgap device according claim 1 wherein the electrodes (4) are implemented to overlap at least two pores of the photonic crystal layer (2).

5. Reconfigurable photonic bandgap device according claim 1 wherein the electrodes (4) are deposited to overlap single pores of the photonic crystal layer (2).

6. Reconfigurable photonic bandgap device according claim 1 wherein the electrodes (4) are implemented to overlap each pore of the photonic crystal layer (2).

7. Reconfigurable photonic bandgap device according claim 1 wherein the pores and electrodes are arranged to realize a modulator structure.

8. Reconfigurable photonic bandgap device according claim 1 wherein the pores and the electrodes are arranged to realize a filter structure.

9. Reconfigurable photonic bandgap device according claim 8, wherein the electrodes are arranged in a way that the back reflection of the first reflecting element and the second reflecting element is minimized by adapting the reflection coefficient of at least the first reflecting element.

10. Method for configuring a photonic crystal device according claim 1 **characterized by** the steps:
Applying an electrical field to at least one electrode of the device
Supplying a voltage to have a specific material property arise in the photonic crystal layer.
